**Europäisches Patentamt**

**European Patent Office**

**Office européen des brevets**

(19)

(11) Veröffentlichungsnummer: **0 193 570**
**B1**

(12) # EUROPÄISCHE PATENTSCHRIFT

(45) Veröffentlichungstag der Patentschrift:
**29.11.89**

(51) Int. Cl.⁴: **B 01 D 13/00**

(21) Anmeldenummer: **85904424.0**

(22) Anmeldetag: **02.09.85**

(86) Internationale Anmeldenummer:
**PCT/DE 85/00304**

(87) Internationale Veröffentlichungsnummer:
**WO 86/01425 (13.03.86 Gazette 86/6)**

(54) **VORRICHTUNG ZUM TRENNEN VON FLUIDGEMISCHEN.**

(30) Priorität: **31.08.84 DE 3432022**
**24.05.85 DE 3518871**

(43) Veröffentlichungstag der Anmeldung:
**10.09.86 Patentblatt 86/37**

(45) Bekanntmachung des Hinweises auf die Patenterteilung:
**29.11.89 Patentblatt 89/48**

(84) Benannte Vertragsstaaten:
**AT BE CH DE FR GB IT LI LU NL SE**

(56) Entgegenhaltungen:
**EP-A- 0 094 543**
**DE-C- 851 048**
**GB-A- 1 037 132**
**GB-A- 2 042 417**
**US-A- 2 981 680**
**US-A- 3 608 610**
**US-A- 3 624 983**

(73) Patentinhaber: **FRAUNHOFER-GESELLSCHAFT ZUR FÖRDERUNG DER ANGEWANDTEN FORSCHUNG E.V., Leonrodstrasse 54, D-8000 München 19 (DE)**

(72) Erfinder: **CHMIEL, Horst, Paracelsustr. 14, D-7250 Leonberg-Ramtel (DE)**

(74) Vertreter: **Schiller, Walter, Dr. et al, Kanzlei Münich & Schiller Willibaldstrasse 36, D-8000 München 21 (DE)**

## Beschreibung

Die Erfindung bezieht sich auf eine Vorrichtung zum Trennen von Fluidgemischen mit einer oder mehreren Membranen gemäss dem Oberbegriff des Patentanspruchs 1.

Eine derartige Vorrichtung ist beispielsweise aus der US-A-3 608 610 oder der US-A-3 624 983 bekannt.

Aus der DE-A-33 04 956 ist eine Vorrichtung bekannt, bei der die Membran eine Pervaporationsmembran, d.h. eine Membran ist, deren Trennfuktion auf unterschiedlichen Löslichkeiten (Sorption) sowie zusätzlich auf unterschiedlichen Diffusionskoeffizienten der einzelnen Bestandteile des Fluidgemisches im Membranmaterial beruht. Das Membranmaterial ist so gewählt, dass sich der abzutrennende Bestandteil des Fluidgemisches im Membranmaterial besser löst als die restlichen Komponenten des Gemisches. Als Membranmaterialien werden beispielsweise Polymere verwendet.

Lässt man auf der einen Seite der Membran das Fluidgemisch vorbeiströmen, während man auf der anderen Seite der Membran einen niedrigeren Partialdruck des abzutrennenden Bestandteils als in dem Fluidgemisch aufrecht erhält, so reichert sich der abzutrennende Bestandteil auf dieser Seite an. Das Permeat, d.h. der abzutrennende Bestandteil verlässt jedoch die Membran im dampfförmigen Zustand, so dass der Umgebung die zur Umwandlung vom flüssigen in den dampfförmigen Zustand erforderliche Wärme entzogen werden muss. Hierdurch kühlt sich das Fluidgemisch ab. Die Abkühlung des Fluidgemisches verlangsamt aber die auf Diffusion beruhenden Transportvorgänge durch die Membran; unter Umständen können die Transportvorgänge sogar praktisch vollständig zum Erliegen kommen.

Aus diesem Grunde ist in der DE-A-33 04 956 vorgeschlagen worden, in dem Flüssigkeits- bzw. Fluidgemisch, das auf der einen Seite der Membran vorbeiströmt, eine Heizung vorzusehen, die eine «optimierbare» gleichmässige Temperatur innerhalb der Rohmediumkammer einstellt. Unter Rohmediumkammer wird dabei in der DE-A-33 04 956 der Bereich verstanden, durch den das Fluidgemisch an der Membran vorbeiströmt.

Diese in der DE-A-33 04 956 vorgeschlagene Heizung des Fluidgemisches hat eine Reihe von Nachteilen:

Durch die in der «Rohmediumkammer» vorgesehene Heizung wird nicht nur das durch die Membran permeierende Fluid aufgeheizt, sondern das gesamte Fluidgemisch, so dass der Leistungsverbrauch beträchtlich ist. Durch die Aufheizung des Fluidgemisches können darüber hinaus temperaturempfindliche Komponenten des Fluidgemisches geschädigt werden. Dies ist insbesondere dann der Fall, wenn die Membran zur kontinuierlichen Produktentfernung aus einem Bioreaktor genutzt wird. In den Fluidgemischen von Bioreaktoren befinden sich auch die das abzutrennende Produkt erzeugenden Mikroorganismen, die häufig sehr temperaturempfindlich sind und bezüglich der Produkterzeugung ein Temperaturoptimum besitzen. Dabei ist es sehr häufig der Fall, dass man zur Kompensation der von der permeierenden Komponente aufgenommenen Verdampfungswärme gezwungen ist, das Fluidgemisch über das Temperaturoptimum hinaus aufzuheizen, so dass es zu einer Verringerung, ja sogar zu einer Einstellung der Produktion kommen kann.

Aus diesem Grunde ist bereits seit längerem in den US-A-3 608 610 oder der US-A-3 624 983 eine Vorrichtung mit einer Pervaporationsmembran vorgeschlagen worden, bei der eine Stützkonstruktion der Membran gleichzeitig als Heizelement für die Aufbringung der Verdampfungswärme dient. Bei dieser bekannten Vorrichtung wird zwar nicht das gesamte Flüssigkeitsgemisch aufgeheizt, die wärmste Stelle ist aber nicht die Membran, sondern die davon beabstandete Stützkonstruktion.

Der Erfindung liegt die Aufgabe zugrunde, eine Vorrichtung zum Trennen von Fluidgemischen derart weiterzubilden, dass eine Abkühlung des Fluidgemisches verhindert wird und die wärmste Stelle im Bereich des Elements mit Trennfunktion liegt.

Eine erfindungsgemässe Lösung dieser Aufgabe ist mit ihren Weiterbildungen in den Patentansprüchen gekennzeichnet.

Überraschenderweise gelingt eine Lösung dieser Aufgabe dadurch, dass von einer Vorrichtung ausgegangen wird, wie sie beispielsweise aus der US-A-3 608 610 oder der US-A-3 624 983 bekannt ist. Zur Weiterbildung einer gattungsgemässen Vorrichtung wird von dem Grundgedanken ausgegangen, mindestens eine beheizbare Porenmembran bzw. Ultrafiltrationsmembran vorzusehen, die aus einem elektrisch leitenden Material besteht und, bei der selektive Teil durch direkten Stromdurchgang oder induktiv beheizbar ist.

Die erfindungsgemässe Ausbildung der Membran als beheizbare Membran ermöglicht eine Beheizung, durch die sich nur die Membran und die unmittelbar an der Membran anliegende Fluidschicht bzw. die in der Membran befindlichen Bestandteile erwärmen. Die Temperatur des gesamten Fluidgemisches erhöht sich aufgrund der lokalen Beheizung der Membran sowie der die Membran umgebenden Fluidschicht praktisch nicht, so dass empfindliche Bestandteile des Fluidgemisches, wie Mikroorganismen etc. nicht geschädigt werden:

Zum einen wird durch die erfindungsgemässe Ausbildung der Membran nur ein kleiner Teil des Fluidgemisches aufgeheizt; vor allem aber kann die der Membran zugeführte Heizleistung so geregelt werden, dass lediglich die der Membran bzw. ihrer Umgebung entzogene «Verdampfungs- bzw. Absorptionswärme» wieder zugeführt wird. Durch die lokale Beheizung wird darüber hinaus die benötigte Heizleistung wesentlich reduziert.

Darüberhinaus ergibt sich durch die Heizung der Membran eine Membrandestillation. Zu den Grundlagen der Membrandestillation wird auf den Artikel von K. Schneider und T.J. van Gassel «Membrandestillation» in Chemie-Ingenieur Technik, 1984, S. 514–521 verwiesen. Die erfindungsgemäss vorgesehene Heizung der Membran hat jedoch gegenüber den bekannten Vorrichtungen, bei denen das Fluidgemisch als Ganzes aufgeheizt wird, die vorstehend erläuterten Vorteile.

Die Porenmembran kann entweder aus einem elektrisch leitenden Material, wie Kohlenstoff oder einem Metall, insbesondere einem Sintermetall bestehen, oder es kann bei einer aus einem Isolator bestehenden Porenmembran eine elektrisch leitende Schicht aufgebracht werden (Ansprüche 10 bzw. 11). In jedem Falle kann die Porenmembran entweder mittels direkten Stromdurchgangs oder induktiv geheizt werden.

Weiterbildungen der Erfindung sind in den Unteransprüchen gekennzeichnet:

Der Trennfaktor der erfindungsgemäss vorgesehenen beheizbaren Membran kann weiter erhöht werden, wenn diese gemäss Anspruch 2 aus einem Material besteht oder auf der dem Fluidgemisch zugewandten Seite mit einem Material beschichtet ist, das von der abzutrennenden Komponente bevorzugt benetzbar ist.

Beispielsweise kann die Membran bei der Trennung von Öl und Wasser hydrophil oder hydrophob beschichtet sein, je nachdem ob das Öl oder das Wasser aus dem Wasser/Öl-Gemisch entfernt werden soll. Diese Benetzbarkeit der Membran durch die abzutrennende Komponente bzw. die Nichtbenetzbarkeit der Membran durch die zurückzuhaltenden Komponenten verstärkt die selektive Wirkung der Beheizung der Membran, so dass bei hohen Trenngeschwindigkeiten grosse Trennfaktoren erhalten werden.

Selbstverständlich ist es möglich, zusätzlich zu der beheizbaren Poren- bzw. Ultrafiltrationsmembran gemäss Anspruch 3 noch andere nicht beheizbare Membrane des gleichen oder eines anderen Typs (z.B. Pervaporationsmembranen nach Anspruch 4) vorzusehen, die ebenfalls eine Trennfunktion haben.

Um technisch und wirtschaftlich relevante Massenströme durch die permselektive Membran hindurch zu erzeugen, muss der selektive Teil der Membran möglichst dünn sein. Er hat deshalb oft keine ausreichende mechanische Festigkeit, insbesondere wenn man berücksichtigt, dass Druckdifferenzen bis zu einigen 100 bar auftreten können. Deshalb ist gemäss Anspruch 5 zusätzlich zum selektiven Teil der Membran ein Stützgerüst vorgesehen.

Dabei ist es besonders vorteilhaft, das Stützgerüst als poröse Schicht und insbesondere als Metallschicht (allerdings ohne eigentliche Filterwirkung) auszubilden. Eine derartige Metallschicht hat nicht nur den Vorteil besonders hoher Festigkeit, sondern lässt sich auch einfach (zusätzlich) beheizen.

Die Verwendung eines porösen Stützgerüstes, dessen Poren keine Trennfunktion haben, ermöglicht weiterhin folgende vorteilhafte Weiterbildung der Erfindung: Beschichtet man die Porenwandungen derart, dass sie von der Komponente bevorzugt benetzt werden, die mittels der nachgeschalteten selektiven Membran abgetrennt werden soll, so wird nicht nur die Trennrate erhöht. Da in die Poren der abzutrennende Bestandteil bevorzugt eindringt, und andererseits im wesentlichen nur das Fluidgemisch in den Poren aufgeheizt wird, wird darüberhinaus auch die über das Stützgerüst eingebrachte Heizleistung besonders effektiv ausgenutzt, während gleichzeitig die Schädigungen beispielsweise von Mikroorganismen weiter reduziert werden (Anspruch 7).

Ferner ist es gemäss Anspruch 8 möglich, mehr als eine beheizbare Membran vorzusehen, um mehr als einen Bestandteil aus einem Fluidmisch abzutrennen: Beispielsweise kann bei der Trennung von Öl/Wasser-Gemischen die eine Membran so beschichtet sein, dass sie bevorzugt von Öl benetzt wird bzw. hydrophob ist, während die andere Membran so beschichtet ist, dass sie hydrophil ist. Ordnet man die beiden Membran so an, dass sie Begrenzungswände eines von dem Öl/Wasser-Gemisch durchströmten Kanals (Anspruch 9) bilden, so kann man mit dieser Anordnung erreichen, dass laufend dem Öl/Wasser-Gemisch sowohl Öl als auch Wasser entzogen wird, so dass die Gesamtkonzentration in etwa konstant ist. Eine in etwa konstante Konzentration von Öl in Wasser bzw. von Wasser in Öl erhöht aber die Trennleistung der erfindungsgemässen Vorrichtung gegenüber einer Vorrichtung, bei der die Konzentration einer Komponente laufend abnimmt. Die Verwendung einer hydrophoben bzw. hydrophilen Beschichtung ist selbstverständlich als Beispiel für den allgemeinen Erfindungsgedanken zu verstehen, gemäss dem die Poren- oder Pervaporationsmembran so beschichtet bzw. mit einem porösen Material kombiniert wird, das von der Komponente bevorzugt wird, die mit der jeweiligen Membran abgetrennt werden soll.

Ferner ist es auch möglich, beispielsweise eine Porenmembran so anzuordnen, dass sie konzentrisch eine Pervaporationsmembran umgibt. Die Porenmembran kann dabei als «Trenn-Vorstufe» eingesetzt werden, wobei sie zusätzlich dazu dient, Bestandteile – wie Mikroorganismen etc. – abzuhalten, die ansonsten einen Belag auf der Pervaporationsmembran bilden würden.

Die Erfindung wird nachstehend anhand der Zeichnung näher beschrieben, in der zeigen:

Fig. 1 ein Ausführungsbeispiel einer erfindungsgemässen Vorrichtung mit einer Porenmembran

Fig. 2 eine Anordnung von erfindungsgemäss ausgebildeten Membranen in einer Vorrichtung, bei der mehr als ein Bestandteil aus einem Fluidgemisch abgetrennt wird.

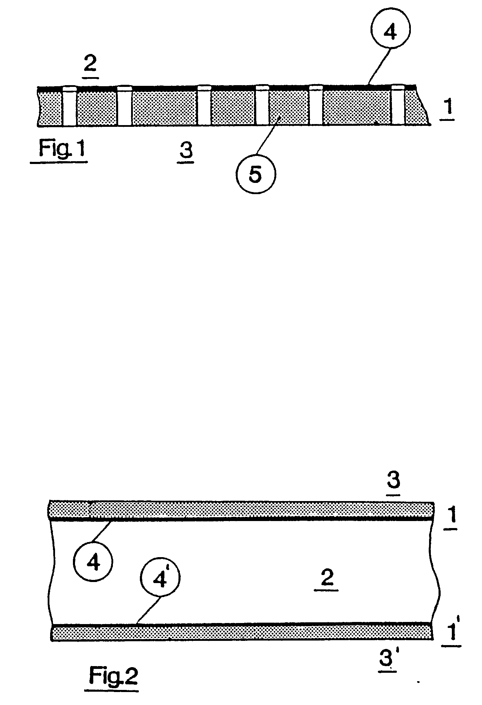

Bei dem in Fig. 1 dargestellten Ausführungsbeispiel strömt auf der Seite 2 (Fluidseite) einer Membran 1 mit Trenn- und Stützfunktion ein Fluidgemisch beispielsweise in einem nicht näher dargestellten Kanal an dieser Membran vorbei.

Auf der anderen Seite 3 (Permeatseite) sorgt eine nicht näher dargestellte Einrichtung dafür, dass ein niedrigerer Partialdruck der abzutrennenden Komponente als auf der Seite des Fluidgemisches aufrechterhalten wird. Die Einrichtung, die den niedrigeren Partialdruck aufrecht erhält, kann beispielsweise eine Saugeinrichtung, eine Kühlfalle oder ein Inertgas-Strom sein. Das Fluidgemisch kann beispielsweise eine wässrige Lösung, ein Öl/Wasser-Gemisch oder ein Produkt/Substrat-Gemisch eines Bioreaktors sein; das Fluidgemisch kann aber auch eine Mischung gasförmiger Komponenten sein.

Die Membran 1 weist als selektive Schicht eine Porenmembran, beispielsweise eine Ultrafiltrationsmembran 5 auf. Die Porenmembran 5 ist auf der Seite 2, auf der sich das Fluidgemisch befindet, aus dem ein Bestandteil abgetrennt werden soll, mit einem Material 4 beschichtet, das bevorzugt von dem abzutrennenden Bestandteil benetzt wird. Soll beispielsweise aus einer wässrigen Lösung ein Bestandteil abgetrennt werden, so kann die Beschichtung 4 der Porenmembran 1 beispielsweise aus einem Polyolefin oder einem Polyvinylidenfluorid bestehen. Derartige Materialien werden von Wasser weitgehend nicht benetzt (hierzu wird auf den bereits genannten Artikel «Membrandestillation» verwiesen).

Umgekehrt kann die Beschichtung 4 hydrophil sein, wenn beispielsweise einer wässrigen Lösung Wasser entzogen werden soll.

Die Porenmembran selbst besteht bei dem gezeigten Ausführungsbeispiel aus einem Metall, so dass sie beispielsweise durch direkten Stromdurchgang oder induktiv beheizbar ist.

Fig. 2 zeigt eine Weiterbildung der Erfindung, bei der mehr als ein Bestandteil aus einem Fluidgemisch abgetrennt werden soll. Hierzu sind zwei Membrane 1 bzw. 1' vorgesehen, die Begrenzungswände eines Kanals 2' bilden, der eine Eintrittsöffnung 8 und eine Austrittsöffnung 9 aufweist, und der von dem Fluidgemisch durchströmt wird. Die selektiven Teile Membranen 1 bzw. 1' können Pervaporationsmembranen oder Porenmembranen sein. Ferner ist es auch möglich, dass eine Membran eine Pervaporationsmembran und die andere Membran eine Porenmembran und die andere Membran eine Porenmembran ist. Die eine Membran 1 ist dabei so beschichtet, dass sie bevorzugt von der einen abzutrennenden Komponente benetzt wird, während die andere Membran 1' eine Beschichtung 4' aufweist, die so gewählt ist, dass bevorzugt von der anderen abzutrennenden Komponente benetzt wird.

Beispielsweise kann, wenn beabsichtigt ist, Öl und Wasser aus einem Öl/Wasseröl/Wasser-Gemisch abzuscheiden, die Beschichtung 4 hydrophob und die Beschichtung 4' hydrophil sein. Ferner ist es auch möglich, anstelle einer beschichteten Membran eine unbeschichtete Pervaporationsmembran zu verwenden, für die die Löslichkeit und Diffusion von Öl besonders gross ist.

Die in Fig. 2 gezeigte Anordnung hat dann den Vorteil, dass durch die eine Membran der eine Bestandteil, also beispielsweise Öl und durch die andere Membran der andere Bestandteil, also beispielsweise Wasser aus dem Fluidgemisch, d.h. dem Öl/Wasser-Gemisch abgeschieden wird. Hierdurch bleibt die Konzentration im Fluidgemisch im Kanal 2 längs der Membran weitgehend konstant, so dass sich über die Gesamtmembranlänge ein konstanter Trennfaktor im Gegensatz zu Anordungen ergibt, bei denen die Konzentration einer Komponente in Strömungsrichtung abnimmt. Ausserdem wird das Umschlagen eines Öl/Wasser-in ein Wasser/Öl-Gemisch verhindert. Dieses Umschlagen verringert bei den bekannten Anordnungen die Trennleistung wesentlich.

Vorstehend ist die Erfindung anhand eines Ausführungsbeispiels beschrieben worden; selbstverständlich sind die verschiedensten Modifikationen möglich:

Beispielsweise ist es möglich, zusätzlich weitere beheizte oder nicht beheizte Membrane vorzusehen, die weitere Trennfunktionen ausüben.

Auch ist die Erfindung selbstverständlich nicht auf die vorstehend dargestellten «linearen Anordnungen» beschränkt. Beispielsweise können auch Anordnungen mit Zylindergeometrie verwendet werden. Bei derartigen Anordnungen kann beispielsweise eine Komponente über die Zylinderachse und die andere über den Zylindermantel abgetrennt werden. Ferner können die erfindungsgemäss vorgesehenen beheizbaren Membrane mit anderen Trennmassnahmen kombiniert werden, beispielsweise kann eine erfindungsgemäss ausgebildete Membran als Tauchrohr eines Hydrozyklons eingesetzt werden. Im übrigen können mit den erfindungsgemässen beheizbaren Membranen alle bekannten Geometrien realisiert werden, wie sie z.B. in hintereinanderschaltbaren Trennmodulen verwendet werden.

**Patentansprüche**

1. Vorrichtung zum Trennen von Fluidgemischen mit einer oder mehreren Membraneinheiten (1), bei dem auf der einen Seite (2) das Fluidgemisch vorbeigeleitet, und auf der anderen Seite (3) ein niedrigerer Partialdruck des abzutrennenden Bestandteils als in dem Fluidgemisch aufrechterhalten wird, und die beheizbar sind, dadurch gekennzeichnet, dass jede Membraneinheit wenigstens eine Porenmembran (1) mit einem elektrisch leitenden Bestandteil – ausgenommen Flüssigmembranen – aufweist, und dass der selektive Teil durch direkten Stromdurchgang oder induktiv beheizbar ist.

2. Vorrichtung nach Anspruch 1, dadurch gekennzeichnet, dass die Porenmembran auf der Seite (2) des Fluidgemisches derart beschichtet ist, dass sie von dem durch sie abzutrennenden Bestandteil des Fluidgemisches bevorzugt benetzbar ist.

3. Vorrichtung nach Anspruch 1 oder 2, dadurch gekennzeichnet, dass jede Membraneinheit wenigstens eine weitere beheizbare oder nicht beheizbere Membran aufweist.

4. Vorrichtung nach Anspruch 3, dadurch gekennzeichnet, dass die weitere Membran eine Pervaporationsmembran ist, in der sich der mit der jeweiligen Porenmembran abzutrennende Bestandteil des Fluidgemisches bevorzugt löst.

5. Vorrichtung nach einem der Ansprüche 1 bis 4, dadurch gekennzeichnet, dass die Membran zusätzlich zu dem selektiven Teil ein Stützgerüst aufweist.

6. Vorrichtung nach Anspruch 5, dadurch gekennzeichnet, dass das Stützgerüst aus einem porösen Material, insbesondere einem Metall besteht.

7. Vorrichtung nach Anspruch 6, dadurch gekennzeichnet, dass das poröse Material des Stützgerüsts und insbesondere die Porenwandungen des porösen Materials entsprechend des Benetzungseigenschaften des abzutrennenden Bestandteils beschichtet sind.

8. Vorrichtung nach einem der Ansprüche 1 bis 7, dadurch gekennzeichnet, dass zum Abscheiden von mehr als einem Bestandteil aus einem Fluidgemisch mehrere unterschiedliche Membranen (1, 1') vorgesehen sind.

9. Vorrichtung nach Anspruch 8, dadurch gekennzeichnet, dass die Membranen (1, 1') Begrenzungswände eines Kanals (2) bilden, den das Fluidgemisch durchströmt.

10. Vorrichtung nach einem der Ansprüche 1 bis 9, dadurch gekennzeichnet, dass die Porenmembran (1) aus einem elektrisch leitenden Material besteht.

11. Vorrichtung nach einem der Ansprüche 1 bis 10, dadurch gekennzeichnet, dass die Porenmembran (1) mit einer elektrisch leitenden Schicht versehen ist.

**Revendications**

1. Dispositif de séparation de mélanges de fluide à un ou plusieurs unités de diaphragme (1), dans lequel le mélange de fluide est amené devant un côté (2) pendant qu'à l'autre côte (3) une pression partielle du composant à séparer est maintenue qui est plus basse que la pression règnante dans le mélange de fluide, lesdits diaphragmes étant chauffables, caractérisé en ce que chaque unité de diaphragme comprend au moins un diaphragme cellulaire (1) à un composant conducteur, à l'exception des diaphragmes liquides, et en ce que la partie différentielle est chauffable par le passage de courant direct ou par induction.

2. Dispositif selon la Revendication 1, caractérisé en ce que le diaphragme cellulaire est couvert, au côté (2) du mélange de fluide, d'une telle couche mince qu'il soit préférablement mouillé par le composant à séparer du mélange de fluide.

3. Dispositif selon la Revendication 1 ou 2, caractérisé en ce que chaque unité de diaphragme comprend au moins un diaphragme supplémentaire chauffable ou non-chauffable.

4. Dispositif selon la Revendication 3, caractérisé en ce que ledit diaphragme supplémentaire est un diaphragme de pervaporation dans lequel se dissout préférablement le composant à séparer du mélange de fluide par le diaphragme cellulaire respectif.

5. Dispositif selon quelconque des Revendications 1 à 4, caractérisé en ce que le diaphragme comprend une structure de support comme supplément à la partie différentielle.

6. Dispositif selon la Revendication 5, caractérisé en ce que ladite structure de support est composée d'une matière capillaire ou à pores, en particulier d'un métal.

7. Dispositif selon la Revendication 6, caractérisé en ce que ladite matière à pores de la structure de support, et en particulier les parois cellulaires de ladite matière à pores, sont enduites par un revêtement correspondant aux propriétés de mouillage du composant à séparer.

8. Dispositif selon quelconque des Revendications 1 à 7, caractérisé en ce que plusieurs diaphragmes (1, 1') différents sont pourvus pour la séparation de plus qu'un composant d'un mélange de fluide.

9. Dispositif selon la Revendication 8, caractérisé en ce que lesdits diaphragmes (1, 1') constituent des parois périphériques d'un passage (2) parcouru par le mélange de fluide.

10. Dispositif selon quelconque des Revendications 1 à 9, caractérisé en ce que le diaphragme cellulaire (1) est composé d'une matière conductrice.

11. Dispositif selon quelconque des Revendications 1 à 10, caractérisé en ce que ledit diaphragme cellulaire (1) est enduit par une couche conductrice.

**Claims**

1. Device for separating fluid mixtures, comprising one or several membrane units (1) wherein the fluid mixture is passed along one side (2) while on the other side (3) a partial pressure of the constituent to be separated is maintained which is lower than the pressure prevailing in the fluid mixture, said membrane units being heatable, characterized in that each membrane unit comprises at least one void-type membrane (1) with an electrically conductive element, with the exception of liquid membranes, and that the selective part of the membrane is heatable by direct passage of electric current or by way of induction.

2. Device according to Claim 1, characterized in that the side (2) of the the void-type membrane, which faces the fluid mixture, is so coated that it will preferably be wetted by the constituent of the fluid mixture which is to be separated therethrough.

3. Device according to Claim 1 or 2, characterized in that each membrane unit comprises at least one additional heatable or non-heatable membrane.

4. Device according to Claim 3, characterized in that the additional membrane is a pervaporation membrane wherein the constituent of the fluid mixture, which is to be separated by means of the respective void-type membrane, preferably dissolves.

5. Device according to any of Claims 1 through 4, characterized in that the membrane includes a

supporting structure in addition to its selective part.

6. Device according to Claim 5, characterized in that the supporting structure consits of a porous material, specifically a metal.

7. Device according to Claim 6, characterized in that the porous material of the supporting structure, and specifically the walls of the pores of the porous material, are coated in accordance with the wetting properties of the constituent to be separated.

8. Device according to any of Claims 1 through 7, characterized in that several different membranes (1, 1') are provided to separate more than one constituent from a fluid mixture.

9. Device according to Claim 8, characterized in that the membranes (1, 1') constitute peripheral or defining walls of a duct or passage (2) through which the fluid mixture passes.

10. Device according to any of Claims 1 through 9, characterized in that the void-type membrane (1) consists of an electrically conductive material.

11. Device according to any of Claims 1 through 10, characterized in that the void-type membrane (1) is coated with an electrically conductive layer.

Fig. 1

Fig. 2